# EUROPÄISCHE PATENTANMELDUNG

(11) **EP 4 851 503 A1**
(43) Veröffentlichungstag der Anmeldung: **09.12.2026**
(21) Anmeldenummer: 26177869.0
(22) Anmeldetag: 11.05.2026
(51) Int. Cl.: F16H 63/34, F16H 61/30, F16H 61/32

(54) **PARKSPERRENSYSTEM**

(30) Priorität: 05.06.2025 DE 102025121991
(71) Anmelder: Magna PT B.V. & Co. KGaA, 74199 Untergruppenbach (DE)
(72) Erfinder: DIETRICH, Frank, 74078 Heilbronn (DE)
(74) Vertreter: Tesch, Sabine

(57) **Zusammenfassung**

Die Erfindung betrifft ein Parksperrensystem (1, 1'), das ein Parksperrenrad (13) mit einer Verzahnung mit Zähnen (13a) und Zahnlücken (13b) umfasst, und eine Parksperrenklinke (11) mit einem Klinkenzahn (11a) aufweist, wobei die Parksperrenklinke (11) drehbar an einer Klinkenachse (12) festgelegt ist, und wobei der Klinkenzahn (11a) zur Einrichtung einer Parksperrenposition in eine Zahnlücke (13b) eingreifen kann und einem Betätigungsmechanismus (20) mit einem Betätigungselement und einem Schaltelement, wobei das Betätigungselement eine drehbare Betätigungswelle (22) ist, auf der ein Anschlagelement (51) gelagert ist, und wobei das Schaltelement eine translatorisch verstellbare Schaltstange (40) ist, die über ein Koppelelement (41) derart mit der Betätigungswelle (22) gekoppelt ist, dass bei einer translatorischen Verstellung der Schaltstange (40) eine zwangsgeführte Verdrehung der Betätigungswelle (22) um ihre Achse (23) und eine Verstellung der Parksperrenklinke (11) in die Parksperrenposition über eine Wirkverbindung zwischen Anschlagelement (51) und Parksperrenklinke (11) erfolgt.

## Beschreibung

Die vorliegende Erfindung betrifft ein Parksperrensystem zur Betätigung einer Parksperre eines Getriebes einer Antriebsanordnung eines Kraftfahrzeugs.

### Stand der Technik

Bei Kraftfahrzeug-Antriebsanordnungen mit einem Verbrennungsmotor und Automatikgetriebe sowie bei Kraftfahrzeug-Antriebsanordnungen mit einer elektrischen Maschine (Elektro- oder Hybridantrieb) kommen Parksperren zum Einsatz, um ein unbeabsichtigtes Wegrollen des Kraftfahrzeugs zu jeder Zeit und an jedem Ort auszuschließen.

Derartige Parksperren sind üblicherweise Bestandteil eines Getriebes des Kraftfahrzeugs und weisen ein mit einer Getriebeausgangswelle verbundenes Parksperrenrad auf, in dessen Verzahnung eine mit dem Gehäuse verbundene Sperrklinke formschlüssig eingreifen kann, um eine Parksperrenstellung einzurichten. In dieser Parksperrenstellung wird eine mechanische Verriegelung des Antriebsstrangs des Kraftfahrzeugs und somit eine Immobilisierung des Kraftfahrzeugs erreicht. Die Betätigung der Parksperre kann sowohl manuell über einen Wählhebel und einen hiermit verbundenen Seilzug oder ein Gestänge oder auch mittels eines Parksperrenaktuators erfolgen. Eine Betätigung einer Parksperrenanordnung durch einen Parksperrenaktuator wird auch als "park by wire" bezeichnet.

Parksperrenanordnungen unterliegen in der Regel engen Vorgaben hinsichtlich des Bauraumes. Die EP 2 927 540 B1 zeigt ein Parksperrensystem, wobei der Betätigungsmechanismus einen um eine gehäusefeste Betätigungsachse zwischen einer Sperrwinkelposition und einer Freigabewinkelposition verschwenkbaren Betätigungshebel aufweist, der mit dem Sperrmechanismus zwangsgekoppelt ist. Der Betätigungsmechanismus ist versetzt zur Welle angeordnet und die Parksperrenklinke wird über ein Koppelglied, das senkrecht zur Drehachse angeordnet ist aktiviert. Der Koppelaktuator sitzt dabei an einer Schaltwalze und beansprucht Bauraum im Getriebe. Es gibt eine in Schaltrichtung genutzte Schaltgabel, die man in der anderen Schaltrichtung für die Parksperrenaktuierung mit verwenden kann.

Des Weiteren offenbart das Dokument DE 10 2015 115 195 A1 eine Parksperranordnung für ein Kraftfahrzeuggetriebe mit einem Parksperrenrad, wobei das Parksperrenrad eine Verzahnung mit Zähnen und Zahnlücken aufweist, mit einer Parksperrenklinke, die einen Klinkenzahn zum Festlegen einer Parksperrstellung (P) aufweist und in eine Zahnlücke eingreifen kann, und mit einem Betätigungsmechanismus mit einem Aktuator zum Betätigen der Parksperrenklinke aus einer Freigabestellung (F) in die Parksperrstellung (P). Der Aktuator ist eine Betätigungswelle, auf der ein Übertragungselement in Form eines Betätigungsnockens drehbar gelagert ist.

Um den in allen Bereichen gestiegenen Anforderungen in Sachen Kompaktheit und Effizienz Rechnung zu tragen, müssen die eingesetzten Parksperrensysteme mit Betätigungsmechanismus kompakt und zuverlässig sein.

Es ist daher eine Aufgabe der vorliegenden Erfindung, ein Parksperrensystem zu schaffen, das wenig Bauraum benötigt und gleichzeitig zuverlässig die Aktuierung und Verstellung de Parksperrenklinke aus der Freigabestellung in die Parkstellung und vice versa ermöglicht.

Die obige Aufgabe wird gelöst mit einem Parksperrensystem, das ein Parksperrenrad mit einer Verzahnung mit Zähnen und Zahnlücken umfasst, und eine Parksperrenklinke mit einem Klinkenzahn aufweist, wobei die Parksperrenklinke drehbar an einer Klinkenachse festgelegt ist, und wobei der Klinkenzahn zur Einrichtung einer Parksperrenposition in eine Zahnlücke eingreifen kann und einem Betätigungsmechanismus mit einem Betätigungselement und einem Schaltelement, wobei das Betätigungselement eine drehbare Betätigungswelle ist, auf der ein Betätigungsnocken drehfest angebunden ist, und wobei das Schaltelement eine translatorisch verstellbare Schaltwelle ist, die über ein Koppelelement derart mit der Betätigungswelle gekoppelt ist, dass bei einer translatorischen Verstellung des Schaltelements eine zwangsgeführte Verdrehung der Betätigungswelle und eine Verstellung der Parksperrenklinke in die Parksperrenposition über eine Wirkverbindung zwischen Betätigungsnocken und Parksperrenklinke erfolgt.

Durch den Betätigungsmechanismus, der eine translatorische Verstellung eines Schaltelements, welches über ein Koppelelement eine zwangsgeführte Verdrehung der Betätigungselements und somit ein Verstellen der Parksperrenklinke in die Parksperrenposition ermöglicht, kann ein Parksperrensystem bereitgestellt werden, welches eine sehr kompakte Bauweise hat.

Dies wird insbesondere dadurch erzielt, dass die Betätigungswelle und das als Schaltwelle ausgeführte Schaltelement eine parallel zueinander ausgerichtete Achse aufweisen.

Die Klinkenachse ist ebenfalls parallel zu der Achse der Betätigungswelle und der Achse der Schaltstange angeordnet.

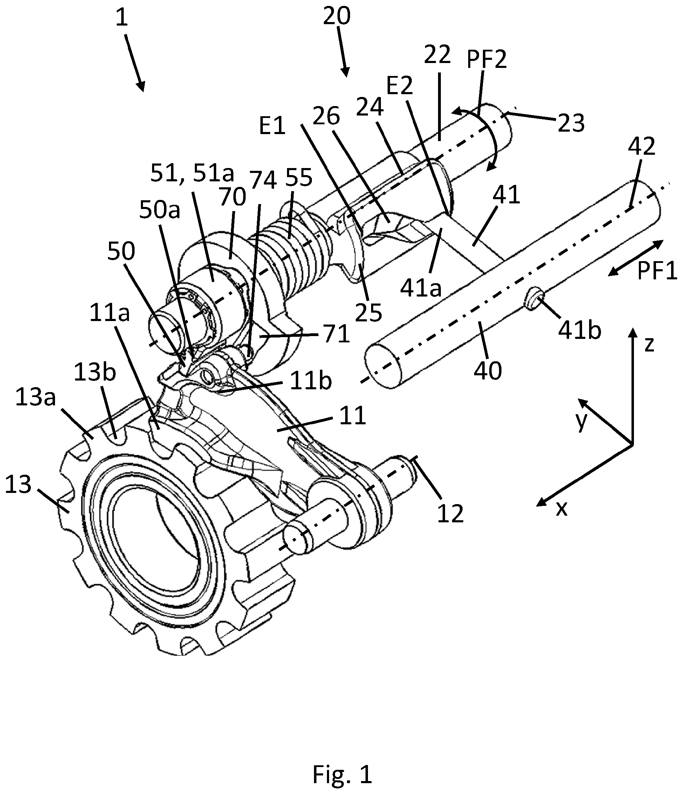

Die Klinkenachse, die Längsachse der Betätigungswelle sowie die Längsachse der Schaltstange sind durch die x-Richtung des in der Figur 1 dargestellten Koordinatensystems angezeigt.

Die zwangsgeführte Übersetzung der translatorischen Bewegung der Schaltwelle in eine rotatorische Bewegung der Betätigungswelle wird vorteilhafterweise über eine Kulissensteuerung erreicht. Hierbei greift das Koppelement mit einem ersten Endbereich in eine an der Betätigungswelle als Nut ausgeführte Kulisse ein.

Besonders vorteilhaft wird der Aufbau des Parksperrensystems, wenn die Schaltstange an einer Schaltgabelanordnung zum Schalten von Gangstufen der Getriebeanordnung angebunden ist.

Damit wird die Aktuatoreinheit mit baulich nahe an das Parksperrenrad sowie an die Schaltgabel platziert, wodurch zusätzliche Hebel zwischen einem Aktuator an der Schaltstange und dem Parksperrenrad und der Parksperrenklinke vermieden werden.

### Beispiel der Erfindung

Ausführungsbeispiele der Erfindung sind in der Zeichnung dargestellt und werden in der nachfolgenden Beschreibung näher erläutert. Es zeigen:
Fig 1: eine perspektivische Ansicht einer Ausführungsform eines erfindungsgemäßen Parksperrensystems in der Parksperrenposition,
Fig. 2: eine perspektivische Ansicht einer weiteren Ausführungsform eines erfindungsgemäßen Parksperrensystems.

Das erfindungsgemäße Parksperrensystem 1 ist zur Verwendung in einer Getriebeanordnung in einem Antriebsstrang eines Kraftfahrzeugs vorgesehen und wird üblicherweise zur Immobilierung des Kraftfahrzeugs eingesetzt. Die Getriebeanordnung ist in der Figur nicht dargestellt, da ein beliebiges Getriebe eingesetzt werden kann. Des Weiteren sind auch keine Gehäuseteile der Getriebeanordnung gezeigt.

Das Parksperrensystem 1 beinhaltet eine Parksperrenanordnung 10, die ein Parksperrenrad 13 beinhaltet, wobei das Parksperrenrad 13 an einer Ausgangswelle der Getriebeanordnung drehfest festgelegt ist. Ein Sperren des Parksperrenrads 13 hat unmittelbar ein Blockieren der angetriebenen Räder des Kraftfahrzeugs zur Folge. Die Ausgangswelle ist nicht dargestellt. Das Parksperrenrad 13 hat eine Außenverzahnung mit Zähnen 13a und dazwischenliegenden Zahnlücken 13b.

Ferner weist die Parksperrenanordnung 10 eine Parksperrenklinke 11 auf, die um eine gehäusefeste Klinkenachse 12 verschwenkbar ist, und zwar zwischen einer Freigabeposition, in der die Parksperrenklinke 11 das Parksperrenrad 13 freigibt, und einer Parksperrenposition, in der ein Sperrzahn 11a der Parksperrenklinke 11 in eine Zahnlücke 13b des Parksperrenrades 13 greift, um die damit verbundene Ausgangswelle gegenüber einem Gehäuseteil der Getriebeanordnung festzulegen und folglich das Kraftfahrzeug zu immobilisieren. Die Figur 1 zeigt die Parksperrenposition. Wie es zu erkennen ist, greift der Sperrzahn 11a in eine Zahnlücke 13b formschlüssig ein. Die Parksperrenklinke 11 ist in dieser Position um die Klinkenachse 12 (x-Richtung) nach vorne verschwenkt. In der nicht gezeigten Freigabeposition ist die Parksperrenklinke 11 um die Klinkenachse 12 zurückgeschwenkt und der Sperrzahn 11a nicht in die Zahnlücke 13b eingreift und ein ungehindertes Verdrehen der Ausgangswelle der Getriebeanordnung möglich ist.

Zur Betätigung der Parksperrenklinke 11 ist ein Betätigungsmechanismus 20 vorgesehen, der ein Betätigungselement und ein Schaltelement 40 umfasst. Das Betätigungselement ist eine Betätigungswelle 20, die um eine Achse 23 verdrehbar gelagert ist. Die Achse 23 ist ebenfalls in x-Richtung ausgerichtet und parallel zur Klinkenachse 12 verlaufend. Auf der Betätigungswelle 22 ist eine Hülse 24 mit einem radial angeformten Abschnitt 25 gelagert. Der Abschnitt 25 ist mit einer als Nut ausgebildeten Kulissenkurve 26 ausgeführt. Die Kulissenkurve 26 umfasst zwei gerade in x-Richtung verlaufende Abschnitte, die durch einen schräg verlaufenden Abschnitt miteinander verbunden sind. In die Kulissenkurve 26 greift ein stangenförmiges Koppelelement 41, mittels eines ersten Endbereichs 41a ein. Dieser erste Endbereich 41a ist als Kulissenstein ausgeführt, der die Kulissenkurve in alternierender Richtung zwischen einem in x-Richtung vorderen Endpunkt E1 und einem hinteren Endpunkt E2 bei einer translatorischen Bewegung des Schaltelements 40 durchlaufen kann.

Das stangenförmige Koppelelement 41 ist an einem als Schaltstange 40 ausgeführten Schaltelement in radialer Richtung (y-Richtung) sich erstreckend an einem zweiten Endbereich 41b angebunden. Die Schaltstange 40 ist ebenfalls mit ihrer Achse 42 in x-Richtung verlaufend parallel zur Achse 23 angeordnet.

Durch die oben beschriebene Anordnung ist die Betätigungswelle 22 zwangsweise mit der Schaltstange 40 derart gekoppelt, dass eine translatorische Bewegung der Schaltstange 40 in Richtung des Doppelpfeils PF1 eine rotatorische Bewegung der Betätigungswelle 22 in Richtung des Doppelpfeils PF2 mit sich führt.

Um bei einer Drehbewegung der Betätigungswelle 22 ein Verschwenken der Parksperrenklinke 22 zu erreichen ist an der Betätigungswelle 22 an einem Endbereich ein Anschlagelement 51 drehbar gelagert. Dieses Anschlagelement 51 umfasst einen ringförmigen Abschnitt 51a mit einem Betätigungsnocken 50. Der Betätigungsnocken 50 umfasst dabei einen radial sich erstreckenden Abschnitt mit einer Betätigungsfläche 50a. Das Anschlagelement 51 ist über eine Torsionsfeder federvorgespannt auf der Betätigungswelle 22 gehalten.

Die grundsätzliche Funktion der Wirkverbindung zwischen Betätigungswelle 22 mit Anschlagelement 51, Mitnehmerscheibe 70 und Parksperrenklinke 11 zwecks Verstellung in eine Parksperrenposition und vice versa in eine entriegelte Position ist in der vorveröffentlichten Druckschrift DE 10 2012 007 061 A1 beschrieben, auf die hiermit Bezug genommen wird.

Die Parksperrenklinke 11 weist an ihrem dem Sperrzahn 11a gegenüberliegenden Bereich eine Anschlagfläche 11b auf. Bei einem translatorischen Verstellen der Schaltstange 40 wird die Koppelstange 41 mit Kulissenstein zunächst ausgehend von der Endposition E1 in dem geraden Abschnitt bis zu dem schrägen Abschnitt der Kulisse bewegt. Bei dem Übergang des Kulissensteins in den schrägen Abschnitt erfolgt bei einer weiteren translatorischen Bewegung der Schaltstange 40 eine Verdrehung der Betätigungswelle 22 und gleichermaßen des Betätigungsnockens 50, der mittels seiner Betätigungsfläche 50a auf die Anschlagfläche der Parksperrenklinke 11 bei einer -Zahn auf Zahn Stellung- federvorgespannt drückt. Der Sperrzahn 11a der Parksperrenklinke 11 rastet dann bei einem weiteren Verdrehen des Parksperrenrads 13 in die nächste Zahnlücke zur Erzielung der verriegelten Parksperrenposition ein. In dieser Position liegt der Kulissenstein mit Koppelstange 41 an dem zweiten Endbereich E2 der Kulisse an.

Wie es weiterhin aus der Figur 1 zu ersehen ist, ist auf der Betätigungswelle 22 benachbart zu dem ringförmigen Abschnitt mit Betätigungsnocken 50 eine Mitnehmerscheibe 70 drehfest angebunden. Die Anbindung erfolgt über einen Sicherungsstift auf der Betätigungswelle 22, der in eine entsprechende Borhung der Mitnehmerscheibe 70 formschlüssig eingreift. Diese Mitnehmerscheibe 70 weist einen radial angeformten Abschnitt mit einer stirnseitig eingebrachten kreisbogenförmigen Kulisse 71 in Form einer Nut auf.

Die Parksperrenklinke 11 weist an ihrem vorderen der Klinkenachse 12 gegenüberliegenden Endbereich benachbart zu der Anschlagfläche einen Mitnehmer 74 auf. Dieser ist bolzenförmig ausgebildet und greift zwangsgeführt in die Kulisse 71 der Mitnehmerscheibe 70 ein. Bei einer zwangsgeführten Rotation der Betätigungswelle 22 ausgehend von der gezeigten Parksperrenposition in die Freigabeposition wird ein Zurückverschwenken der Parksperrenklinke und ein Herausschwenken des Sperrzahns über eine Mitnahme des Mitnehmers 74 in der Kulisse unterstützt. Die Kulisse begrenzt auch das Verschwenken der Parksperrenklinke 11 und ermöglicht eine Begrenzung in der Freigabeposition.

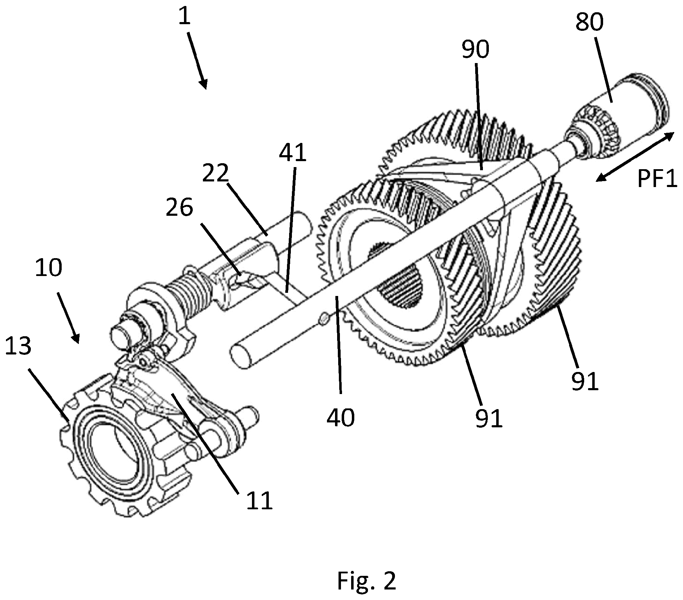

Die Aktuatoreinheit 80 die zur translatorischen Verstellung der Schaltstange 40 vorgesehen ist, ist zu der Ausführung der Figur 2 beschrieben und in der Figur 1 nicht dargestellt. Sie umfasst eine hydraulisch betätigbare Kolben-Zylinder-Einheit, die entsprechend der gewünschten Verstellung in x-Richtung angesteuert wird.

Die Figur 2 zeigt eine weitere Ausführungsform des erfindungsgemäßen Parksperrensystems1', wobei die Schaltstange 40 zusätzlich zur Aktuierung der Betätigungswelle 22 auch zur gleichzeitigen Aktuierung einer Schaltgabel 90 verwendet wird.

Wie es aus den Zeichnungen zu ersehen ist, ist an einem von dem Koppelelement 41 axial beabstandeten Bereich eine Schaltgabel 90 drehfest angebunden, die bei einer translatorischen Verstellung der Schaltstange 40 längs des Pfeils PF1 die Schaltgabel 90 entsprechend axial verstellt. Wie es weiterhin aus der Zeichnung zu ersehen ist, greift die Schaltgabel 90 mittig zwischen zwei Zahnräder 91 der Getriebeanordnung ein, die als Losräder auf einer Getriebewelle zur Ausbildung von Gangstufen angeordnet sind. Zur drehfesten Kopplung der Zahnräder 91 auf der nicht gezeigten Getriebewelle ist zwischen den beiden Zahnrädern 91 eine Kupplungseinheit mit vorzugsweise Synchronisierungseinheit angeordnet. Die Schaltgabel 90 ist dabei mit der auf der Getriebewelle angeordneten Synchroneinheit oder Kupplungseinheit derart wirkverbunden gekoppelt, dass bei einem Verschieben der Schaltgabel 90 in eine der beiden durch den Pfeil PF1 angezeigten Richtungen das entsprechend zugeordnete Losrad mit der Getriebewelle zwecks Schaltens einer Gangstufe drehfest verbunden wird.

Wie obenstehend bereits erläutert, erfolgt ein translatorisches Verschieben der Schaltstange 40 durch eine Aktuatoreinheit 80. Diese ist endseitig an der Schaltstange 40 als hydraulisch betätigbare Kolben-Zylinder-Einheit ausgeführt. Es ist selbstverständlich, dass die Aktuatoreinheit 80 auch in einer anderen Ausführungsform und mit einer andere Betätigungsart, wie einer elektromotorischen Betätigung verwendet werden kann.

### Bezugszeichenliste

- 1: Parksperrensystem
- 10: Parksperrenanordnung
- 11: Parksperrenklinke
- 11a: Sperrzahn
- 11b: Anschlagfläche
- 12: Klinkenachse
- 13: Parksperrenrad
- 13a: Zähne
- 13b: Zahnlücken
- 20: Betätigungsmechanismus
- 22: Betätigungswelle
- 23: Achse
- 24: Hülse
- 25: radial angeformter Abschnitt
- 26: Kulissenkurve
- 40: Schaltstange
- 41: Koppelelement
- 41a: erster Endbereich
- 41b: zweiter Endbereich
- 42: Achse
- 50: Betätigungsnocken
- 50a: Betätigungsfläche
- 51: Anschlagelement
- 51a: ringförmiger Abschnitt
- 55: Torsionsfeder
- 70: Mitnehmerscheibe
- 71: Kulisse
- 80: Aktuatoreinheit
- 90: Schaltgabel
- 91: Zahnräder

## Patentansprüche

1. Parksperrensystem (1, 1'), das ein Parksperrenrad (13) mit einer Verzahnung mit Zähnen (13a) und Zahnlücken (13b) umfasst, und eine Parksperrenklinke (11) mit einem Klinkenzahn (11a) aufweist, wobei die Parksperrenklinke (11) drehbar an einer Klinkenachse (12) festgelegt ist, und wobei der Klinkenzahn (11a) zur Einrichtung einer Parksperrenposition in eine Zahnlücke (13b) eingreifen kann und einem Betätigungsmechanismus (20) mit einem Betätigungselement und einem Schaltelement, wobei das Betätigungselement eine drehbare Betätigungswelle (22) ist, auf der ein Anschlagelement (51) gelagert ist, und wobei das Schaltelement eine translatorisch verstellbare Schaltstange (40) ist, die über ein Koppelelement (41) derart mit der Betätigungswelle (22) gekoppelt ist, dass bei einer translatorischen Verstellung der Schaltstange (40) eine zwangsgeführte Verdrehung der Betätigungswelle (22) um ihre Achse (23) und eine Verstellung der Parksperrenklinke (11) in die Parksperrenposition über eine Wirkverbindung zwischen Anschlagelement (51) und Parksperrenklinke (11) erfolgt.

2. Parksperrensytem (1, 1') nach Anspruch 1, **dadurch gekennzeichnet, dass** die Längsachse (42) der Schaltstange (40) und die Achse (23) der Betätigungswelle (22) parallel zueinander verlaufend ausgerichtet sind.

3. Parksperrensystem (1, 1') nach Anspruch 1 oder 2, **dadurch gekennzeichnet, dass** die zwangsgeführte Kopplung und Übersetzung der translatorischen Bewegung der Schaltstange (40) in eine Drehbewegung der Betätigungswelle (22) über eine Kulissensteuerung erfolgt, die einen an dem Koppelelement (41) angebundenen Kulissenstein umfasst, der in eine Kulisse (26) der Betätigungswelle (20) eingreift.

4. Parksperrensystem (1, 1') nach einem der vorangehenden Ansprüche, **dadurch gekennzeichnet, dass** das Anschlagelement (51) einen ringförmigen Abschnitt (51a) mit einem radial sich erstreckenden Betätigungsnocken (50) umfasst, wobei der Betätigungsnocken (50) eine Betätigungsfläche (50a) aufweist.

5. Parksperrensystem (1, 1') nach Anspruch 4, **dadurch gekennzeichnet, dass** das Anschlagelement (51) über eine Torsionsfeder federvorgespannt und drehbar auf der Betätigungswelle (22) gelagert ist.

6. Parksperrensystem (1, 1') nach einem der vorangehenden Ansprüche, **dadurch gekennzeichnet, dass** die translatorische Verstellung der Schaltstange (40) in Axialrichtung über eine Aktuatoreinheit (80), vorzugsweise eine hydraulisch betätigbare Kolben-Zylinder-Einheit erfolgt.

7. Parksperrensystem (1, 1') nach einem der vorangehenden Ansprüche, **dadurch gekennzeichnet, dass** über die translatorische Verstellung der Schaltstange (40) eine weitere Funktionseinheit betätigt werden kann.

8. Parksperrensystem (1, 1') nach Anspruch 7, **dadurch gekennzeichnet, dass** die Funktionseinheit eine schaltbare Kupplung und/oder Synchronisationseinheit umfasst, die über eine an der Schaltstange (40) festgelegte Schaltgabel (90) Losräder (91) einer Getriebeeinheit drehfest mit einer Getriebewelle schalten kann.

## Geänderte Patentansprüche

### Geänderte Patentansprüche gemäss Regel 137(2) EPÜ.

1. Parksperrensystem (1, 1'), das ein Parksperrenrad (13) mit einer Verzahnung mit Zähnen (13a) und Zahnlücken (13b) umfasst, und eine Parksperrenklinke (11) mit einem Klinkenzahn (11a) aufweist, wobei die Parksperrenklinke (11) drehbar an einer Klinkenachse (12) festgelegt ist, und wobei der Klinkenzahn (11a) zur Einrichtung einer Parksperrenposition in eine Zahnlücke (13b) eingreifen kann und einem Betätigungsmechanismus (20) mit einem Betätigungselement und einem Schaltelement, wobei das Betätigungselement eine drehbare Betätigungswelle (22) ist, auf der ein Anschlagelement (51) gelagert ist, und wobei das Schaltelement eine translatorisch verstellbare Schaltstange (40) ist, die über ein Koppelelement (41) derart mit der Betätigungswelle (22) gekoppelt ist, dass bei einer translatorischen Verstellung der Schaltstange (40) eine zwangsgeführte Verdrehung der Betätigungswelle (22) um ihre Achse (23) und eine Verstellung der Parksperrenklinke (11) in die Parksperrenposition über eine Wirkverbindung zwischen Anschlagelement (51) und Parksperrenklinke (11) erfolgt,
**dadurch gekennzeichnet, dass** die Längsachse (42) der Schaltstange (40) und die Achse (23) der Betätigungswelle (22) parallel zueinander verlaufend ausgerichtet sind.

2. Parksperrensystem (1, 1') nach Anspruch 1, **dadurch gekennzeichnet, dass** die zwangsgeführte Kopplung und Übersetzung der translatorischen Bewegung der Schaltstange (40) in eine Drehbewegung der Betätigungswelle (22) über eine Kulissensteuerung erfolgt, die einen an dem Koppelelement (41) angebundenen Kulissenstein umfasst, der in eine Kulisse (26) der Betätigungswelle (20) eingreift.

3. Parksperrensystem (1, 1') nach einem der vorangehenden Ansprüche, **dadurch gekennzeichnet, dass** das Anschlagelement (51) einen ringförmigen Abschnitt (51a) mit einem radial sich erstreckenden Betätigungsnocken (50) umfasst, wobei der Betätigungsnocken (50) eine Betätigungsfläche (50a) aufweist.

4. Parksperrensystem (1, 1') nach Anspruch 3, **dadurch gekennzeichnet, dass** das Anschlagelement (51) über eine Torsionsfeder federvorgespannt und drehbar auf der Betätigungswelle (22) gelagert ist.

5. Parksperrensystem (1, 1') nach einem der vorangehenden Ansprüche, **dadurch gekennzeichnet, dass** die translatorische Verstellung der Schaltstange (40) in Axialrichtung über eine Aktuatoreinheit (80), vorzugsweise eine hydraulisch betätigbare Kolben-Zylinder-Einheit erfolgt.

6. Parksperrensystem (1, 1') nach einem der vorangehenden Ansprüche, **dadurch gekennzeichnet, dass** über die translatorische Verstellung der Schaltstange (40) eine weitere Funktionseinheit betätigt werden kann.

7. Parksperrensystem (1, 1') nach Anspruch 6, **dadurch gekennzeichnet, dass** die Funktionseinheit eine schaltbare Kupplung und/oder Synchronisationseinheit umfasst, die über eine an der Schaltstange (40) festgelegte Schaltgabel (90) Losräder (91) einer Getriebeeinheit drehfest mit einer Getriebewelle schalten kann.
